# EUROPÄISCHE PATENTSCHRIFT

(11) **EP 0 806 576 B1**
(45) Veröffentlichungstag und Bekanntmachung des Hinweises auf die Patenterteilung: **04.12.2002**
(21) Anmeldenummer: 97106098.3
(22) Anmeldetag: 14.04.1997
(51) Int. Cl.: F16B 37/02

(54) **Blechelement mit Gewindeeindruck**
Sheet metal element with threaded hole
Element en tôle avec trou tarandé

(30) Priorität: 06.05.1996 DE 19618106
(43) Veröffentlichungstag der Anmeldung: 12.11.1997
(73) Patentinhaber: BSH Bosch und Siemens Hausgeräte GmbH, 81669 München (DE)
(72) Erfinder: Unterreiner, Christian, Dipl.-Ing. (FH), 83404 Ainring (DE); Hohenadler, Andreas, 83278 Traunstein (DE)

(56) Entgegenhaltungen:
- DE-A- 4 430 065
- DE-A- 4 437 798

## Beschreibung

Die vorliegende Erfindung bezieht sich auf ein Blechelement mit einem Gewindeeindruck nach dem Oberbegriff des Patentanspruches 1.

Derartige Schraubverbindungen sind allgemein bekannt, wobei insbesondere bei dünnen Blechelementen und Blechschrauben das Problem besteht, daß das dünne, mit dem Muttergewinde versehene Blechmaterial einem geforderten Schrauben-Anzugsdrehmoment nicht standhält. Abhilfe wird diesbezüglich gemäß der DE 44 30 065 A1 dadurch erreicht, daß im Gewindebereich das Blechmaterial des Blechelementes durch ein zusatzliches, unmittelbar auf dem Blechmaterial aufliegendes Blechsegment verstärkt und in den Gewindeeindruck einbezogen ist. Diese Doppelung des Materials führt jedoch zu erhöhten Fertigungskosten und bedarf grundsätzlich neuer Werkzeuge zur Herstellung des Gewindeeindruckes.

Aufgabe der vorliegenden Erfindung ist es deshalb, bei einem Gewindeeindruck eines Blechelementes mit geringem Aufwand ein erhöhtes Schrauben-Anzugsdrehmoment bereitzustellen.

Erfindungsgemäß ist dies durch ein Blechelement mit den Merkmalen gemäß Patentanspruch 1 erreicht. Bei dieser Ausgestaltung des Gewindeeindrucks kann eine Blechschraube zunächst ohne großen Kraftaufwand in den Gewindeeindruck gedreht werden, da die Gewinde des Gewindeeindrucks und der Schraube aufeinander abgestimmt sind und insbesondere im wesentlichen die gleiche Steigung besitzen. Die Schraube ist durch den Gewindeeindruck beim Eindrehvorgang zunächst sauber geführt. Beim weiteren Eindrehen durchdringt die Schraube den Blechansatz und drückt dabei das Material des Blechansatzes in die Flanken der Schraube, wodurch das Schrauben-Anzugsdrehmoment deutlich erhöht wird.

Fertigungstechnisch besonders günstig ist es, dass der Blechansatz durch mindestens einen sich in Fortsetzung der Gewindeeindruckwandung erstreckenden Blechlappen gebildet ist. Das für die Lappen erforderliche Blechmaterial kann beispielsweise aus dem kreisflächenförmigen Bereich in der Mitte des Gewindeeindruckes stammen, der ansonsten üblicherweise beim Vorlochen vor dem Gewindeeindrückvorgang aus dem Blechelement gestanzt wird. Dazu ist es lediglich erforderlich, daß aus dem vorderen Endabschnitt des für die Herstellung des Gewindeeindruckes erforderlichen Werkzeugstempels ein entsprechend ausgeformter Dorn ragt.

Vorteilhafterweise ist der Blechansatz hülsenförmig ausgebildet und erstreckt sich in Fortsetzung des Randes der Gewindeeindruckwandung. Dies hat einen gleichmäßig verlaufenden Kraft- bzw. Drehmomentaufwand beim Eindrehen der Schraube, eine gute Führung der Schraube während des Eindrehvorganges und eine Erhöhung des Schrauben-Anzugsdrehmomentes zur Folge.

Gemäß einer bevorzugten Ausführungsform ist der freie Innendurchmesser des Blechansatzes über seine gesamte Länge im wesentlichen gleich dem Kerndurchmesser einer in den Gewindeeindruck eindrehbaren Schraube. Abhängig vom jeweiligen Anwendungsfall kann durch die Größe bzw. die Änderung des freien Innendurchmessers des Blechansatzes über seine Länge der Eindrehkomfort und das erzielbare Schrauben-Anzugsdrehmoment eingestellt werden. Während ein in Verlängerung der trichterförmigen Gewindeeindruckwandung sich weiter trichterförmig verjüngender Blechansatz das zum Eindrehen der Schraube erforderliche Schrauben-Eindrehdrehmoment erhöht, wird durch einen sich konisch in Verlangerung der Gewindeeindruckwandung erweiternden Blechansatz das Schrauben-Anzugsdrehmoment verringert. Beide Drehmomente weisen einen günstigen Verlauf wahrend des Eindrehvorganges und günstige Werte auf, wenn der freie Innendurchmesser des Blechansatzes gemäß Patentanspruch 5 gewählt ist.

Die obigen Vorteile sind insbesondere bei Blechelementen einer Blechstärke von weniger als 1,0 mm, vorzugsweise weniger als 0,6 mm von besonderer Bedeutung. Das üblicherweise geforderte Schrauben-Anzugsdrehmoment von ca. 160 Ncm ist nämlich bei derartigen Blechstärken ansonsten kaum erreichbar.

Die Erfindung ist anhand zweier schematisch dargestellter Ausführungsbeispiele nachstehend erläutert.
Es zeigt
- Fig. 1: in einer Seitenansicht einen Abschnitt eines Blechelementes mit einem Gewindeeindruck,
- Fig. 2: in einer Schnittdarstellung im wesentlichen entlang der Linie II-II in Fig. 1,
- Fig. 3: eine Draufsicht des in Fig. 2 gezeigten Blechelementes,
- Fig. 4: in einer Ansicht gemäß Fig. 1 ein zweites Ausführungsbeispiel des Blechelementes mit einem abgewandelten Blechansatz und
- Fig. 5: eine Schnittdarstellung des Blechelementes gemäß dem zweiten Ausführungsbeispiel mit einer eingedrehten Schraube.

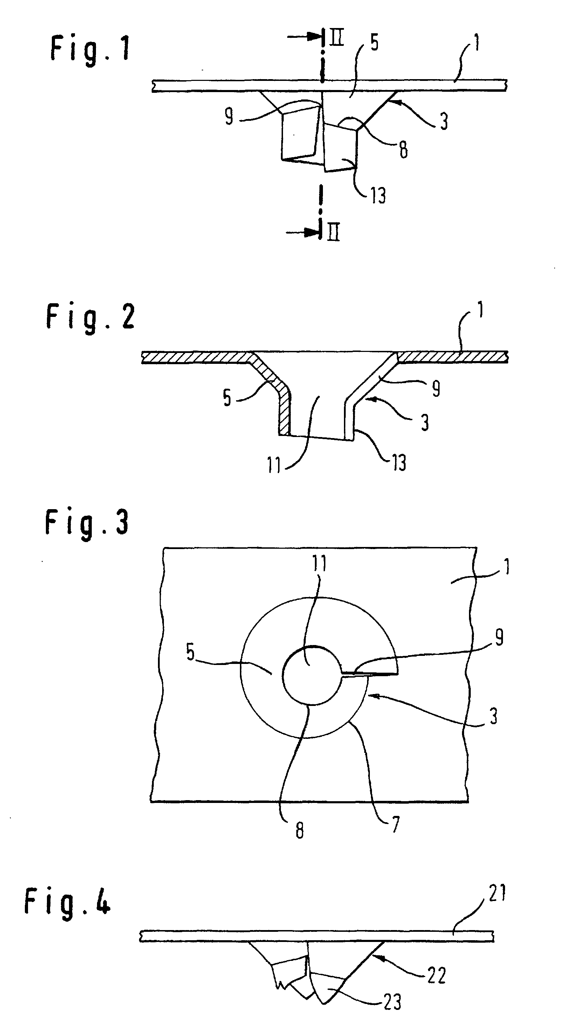

In den Figuren 1 bis 3 ist ein Abschnitt eines Blechelementes 1 gezeigt, das mit einem Gewindeeindruck 3 zum Einschrauben einer Blechschraube (nicht gezeigt) versehen ist. Das Blechelement hat eine Stärke von 0.5 mm. Aus dem Blechelement 1 ist eine im wesentlichen trichterförmige Gewindeeindruckwandung 5 des Gewindeeindruckes 3 nach unten gedrückt. Dabei erstreckt sich der Gewindeeindruck 3 an der Oberseite des Blechelementes 1 von einer spiralförmigen Eindruckkante 7 nach unten zu einer schraubenlinienförmigen Randkante 8 am unteren Endabschnitt der Gewindeeindruckwandung 5 mit einer der einzudrehenden Schraube entsprechenden Gewindesteigung. Die Gewindeeindruckwandung 5 ist deshalb durch einen Schlitz 9 über ihre gesamte Höhe unterbrochen. Die Randkante 8 begrenzt eine Gewindeeindrucköffnung 11, durch die die Blechschraube beim Eindrehen ragt. Weiterhin ist die Gewindeeindruckwandung 5 von der Randkante 8 aus durch eine geschlitzte Blechhülse 13 einstückig fortgesetzt. Der Innendurchmesser der Blechhülse 13 entspricht dabei im wesentlichen dem Kerndurchmesser der einzudrehenden Schraube (nicht gezeigt).

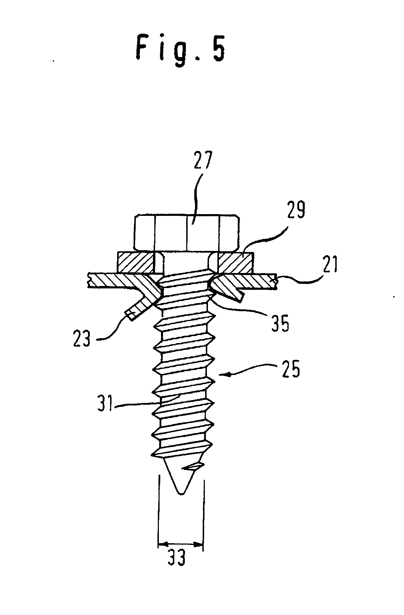

Im zweiten Ausführungsbeispiel (Fig. 4) weist ein Blechelement 21 einen dem ersten Ausführungsbeispiel entsprechenden Gewindeeindruck 22 auf. Die geschlitzte Hülse aus dem ersten Ausführungsbeispiel ist jedoch durch sich umfangsseitig von der Randkante der Gewindeeindruckwandung aus erstreckende zinkenförmige Blechlappen 23 ersetzt. Der durch die drei Blechlappen 23 gebildete freie Innendurchmesser verringert sich in Verlängerung der Gewindeeindrucköffnung entlang der Blechlappen 23 geringfügig. In Fig. 5 ist eine in das Blechelement 21 eingeschraubte Blechschraube 25 dargestellt, zwischen deren Schraubenkopf 27 und der Oberseite des Blechelements 21 ein gelochtes Blechstück 29 geklemmt ist. Ein Schraubengewinde 31 ist schraubenlinienförmig auf dem Schraubenschaft mit einem Kerndurchmesser 33 ausgebildet. Der Kerndurchmesser 33 entspricht im wesentlichen dem freien Innendurchmesser, der durch die Blechlappen 23 gebildetet ist. Die Blechlappen 23 sind in Gewindeflanken 35 der Schraube 25 gedrückt und nach außen vom Schraubenschaft weg gebogen. Dadurch ist das Schrauben-Anzugsdrehmoment erhöht. Das Blechmaterial für die Blechlappen 23 in Fig. 4 stammt von der Gewindeeindrucköffnung. Dazu ist auf den Werkzeugstempelkopf ein Dorn gesetzt, der in einem ersten Schritt beim Eindringen des Stempels in das Blechelement zunächst Blechmaterial im Bereich der Gewindeeindrucköffnung nach unten drückt bzw. reißt und dann in einem zweiten Schritt den Gewindeeindruck im Blechelement ausformt.

## Patentansprüche

1. Blechelement (1;21), das wenigstens einen Gewindeeindruck (3) mit einer ein Schraubgewinde bildenden Gewindeeindruckwandung (5) aufweist, **dadurch gekennzeichnet, dass** sich in Fortsetzung der Gewindeeindruckwandung (5) von deren schraubenlinienförmigen Rand (8) aus ein Blechansatz (13, 23) erstreckt, und dass der Blechansatz durch mindestens einen sich in Fortsetzung der Gewindeeindruckwandung erstreckenden Blechlappen (23) gebildet ist.

2. Blechelement nach Anspruch 1, **dadurch gekennzeichnet, dass** der Blechansatz (13) hülsenförmig ausgebildet ist.

3. Blechelement nach einem der vorhergehenden Ansprüche, **dadurch gekennzeichnet, dass** der freie Innendurchmesser des Blechansatzes (13, 23) über seine gesamte Länge im wesentlichen gleich dem Kerndurchmesser (33) einer in den Gewindeeindruck (3) eindrehbaren Schraube (25) ist.

4. Blechelement nach einem der vorhergehenden Ansprüche, **dadurch gekennzeichnet, dass** das Blechelement (1, 21) eine Blechstärke von weniger als 1,0 mm, vorzugsweise von weniger als 0,6 mm besitzt.

## Claims

1. Sheet metal element (1; 21) which has at least one threaded depression (3) with a threaded depression wall (5) forming a screw thread, **characterised in that** a sheet metal projection (13, 23) extends in continuation of the threaded impression wall (5) out from the helical edge (8) thereof and that the sheet metal projection is formed by at least one sheet metal tab (23) extending in prolongation of the threaded depression wall.

2. Sheet metal element according to claim 1, **characterised in that** the sheet metal projection (13) is formed to be sleeve-shaped.

3. Sheet metal element according to one of the preceding claims, **characterised in that** the free inner diameter of the sheet metal projection (13, 23) is substantially equal over its entire length to the core diameter (33) of a screw (25) threadable into the threaded depression (3).

4. Sheet metal element according to one of the preceding claims, **characterised in that** the sheet metal element (1, 21) has a sheet metal thickness of less than 1.0 mm, preferably less than 0.6 mm.

## Revendications

1. Elément en tôle (1 ; 21) qui comprend au moins un trou taraudé (3) avec une paroi de trou taraudé (5) formant un filetage de vis, **caractérisé en ce que** dans la continuation de la paroi du trou taraudé (5) depuis le bord en forme d'hélice (8) s'étend un épaulement en tôle (13, 23), et **en ce que** l'épaulement en tôle est formé par au moins une languette en tôle (23) s'étendant dans la continuation de la paroi du trou taraudé.

2. Elément en tôle selon la revendication 1, **caractérisé en ce que** l'épaulement en tôle (13) est conçu en forme de douille.

3. Elément en tôle selon l'une des revendications précédentes, **caractérisé en ce que** le diamètre interne libre de l'épaulement en tôle (13, 23) est sur toute sa longueur essentiellement égal au diamètre intérieur (33) d'une vis (25) pouvant être introduite en torsion dans le trou taraudé (3).

4. Elément selon l'une des revendications précédentes, **caractérisé en ce que** l'élément en tôle (1, 21) possède une épaisseur de tôle inférieure à 1,0 mm, de préférence inférieure à 0,6 mm.
